(19) **Europäisches Patentamt**

**European Patent Office**

**Office européen des brevets**

(11) **EP 0 644 602 B1**

(12) **EUROPÄISCHE PATENTSCHRIFT**

(45) Veröffentlichungstag und Bekanntmachung des Hinweises auf die Patenterteilung:
**26.03.1997   Patentblatt 1997/13**

(51) Int Cl.$^6$: **H01M 2/28**

(21) Anmeldenummer: **94110693.2**

(22) Anmeldetag: **09.07.1994**

(54) **Plattenblock für Bleiakkumulatoren**

Plate stack for lead accumulators

Ensemble de plaques pour accumulateurs au plomb

(84) Benannte Vertragsstaaten:
**AT DE ES FR GB IT PT**

(30) Priorität: **16.09.1993   DE 4331446**

(43) Veröffentlichungstag der Anmeldung:
**22.03.1995   Patentblatt 1995/12**

(73) Patentinhaber: **VB Autobatterie GmbH**
**D-30419 Hannover (DE)**

(72) Erfinder:
• **Arus, Jose**
**E-08960 Sant Just Desvern (Barcelona) (ES)**
• **Koss, Herbert**
**D-31141 Hildesheim (DE)**
• **Böke, Gerald**
**D-31141 Hildesheim (DE)**

(74) Vertreter: **Kaiser, Dieter Ralf, Dipl.-Ing.**
**Gundelhardtstrasse 72**
**65779 Kelkheim (DE)**

(56) Entgegenhaltungen:
**US-A- 4 160 071**

**Beschreibung**

Die Erfindung betrifft einen Plattenblock für Bleiakkumulatoren aus einer Anzahl von mit Plattenfahnen versehenen positiven und negativen Platten, der durch Umgießen der Fahnen in einer das Brückenblei enthaltenden Gießform hergestellt ist. Sie erstreckt sich ferner auf ein Verfahren zur Herstellung eines solchen Plattenblocks.

Die Vereinigung zweier Plattensätze zu einem Plattenblock geschieht gewöhnlich in der Weise, daß die positiven und negativen Gitterplatten in alternierender Folge und unter Zwischenlage von Separatoren gestapelt werden, wobei die Fahnenableiter der positiven Platten den Fahnenableitern der negativen Platten an der Oberseite des Stapels einander gegenüberliegen, und daß der komplett vorgefertigte Plattenblock über Kopf gehaltert wird, so daß die nach unten hängenden Fahnen in von unten gegen den Plattenblock hochgefahrene, mit schmelzflüssigem Blei - dem späteren Brückenblei - gefüllte Gießformen eintauchen; dabei werden die Fahnen angeschmolzen und verbinden sich so mit der Masse des eingegossenen Bleis, das nach dem Erstarren die Polbrücken bildet. Die Gießformen sind in definiertem Abstand fest zueinander angeordnet, so daß der Fahnenanguß an beiden Brücken simultan erfolgen kann.

Diese Arbeitsweise schließt nicht aus, daß sich schlechte Verbindungsstellen ergeben können, die dann beim Gebrauch der Akkumulators brechen oder zu großen elektrischen Widerstand aufweisen. Ein Hindernis für ein einwandfreies Zusammenfließen des eingegossenen und des eben angeschmolzenen Bleis stellt u.a. die hauchdünne Oxidschicht dar, welche die Fahnenoberflächen bedeckt. Aus diesem Grunde werden die Fahnenableiter häufig vor dem Anguß in eine Flußmittellösung eingetaucht, um die Oberflächenoxide zu entfernen und die Verbindung zu verbessern.

Wesentliche Voraussetzungen für eine gute Verbindung sind jedoch ein guter Wärmeübergang und ein ausgeglichener Wärmehaushalt. Dabei sollte die durch die Fahnen aus dem Schmelzbad abgeleitete Wärme nicht zu groß sein, da sonst die Erstarrung zu rasch erfolgt. Andererseits möchte man eine zusätzliche Aufheizung des Schmelzbades aus ökonomischen Gründen vermeiden.

Aus der US-PS 4 160 071 sind Plattenfahnen bekannt, deren normalerweise rechteckiger Querschnitt zum äußeren Ende hin keilförmig reduziert ist. Durch diese Formgebung soll sowohl die Masse der Fahne auf das notwendige Minimum beschränkt als auch ein unnötiger Wärmeaufwand verhindert werden, indem nämlich schmelzflüssiges Blei dank seiner Netzfähigkeit trotz geringer Eintauchtiefe an dem Keilprofil aufsteigt und einen Meniskus bildet. Dadurch wird der nicht eingetauchte Teil der Fahne mit adhärierendem Blei aufgefüllt, und die Fahne besitzt nach dem Erstarren im Verbindungsbereich mindestens den gleichen rechteckigen Querschnitt wie in dem nicht zugespitzten Teil.

Um für alle Fahnen eines Plattensatzes gleiche Anschmelz- und Abkühlungsbedingungen zu schaffen, ist gemäß DE-OS 36 20 891 auch schon vorgeschlagen worden, die Geometrie der Gießformen so zu verändern, daß die auf jede Fahne entfallende Wärmemenge, gegeben jeweils durch das Volumen und die Wärmekapazität des zum Einzugsbereich der Fahne gehörenden Brückenbleis sowie des umgebenden Formenwandabschnitts, im wesentlichen von gleicher Größe ist. Das Gesamtsystem wird quasi aus Längenabschnitten mit jeweils einer darauf entfallenden Fahne aufgebaut, die identische Wärmeinhalte besitzen. Diese Bedingung wird von einer Gießform erfüllt, bei der das auf die Außenfahnen entfallende Brückenbleivolumen verkleinert und die umgebende Formenwandung stattdessen verstärkt ist.

In der Batteriefertigung müssen häufig positive und negative Gitterplatten, von denen diejenigen der einen Polarität dickere Plattenfahnen als die der anderen Polarität besitzen, zu gemeinsamen Plattenblöcken verarbeitet werden, wobei aber für das simultane Verbinden beider Plattensätze mit dem jeweiligen Brückenblei nur gleiche Gießformen eingesetzt werden können oder zur Verfügung stehen.

Aufgabe der Erfindung ist es auch bei derart aufgebauten Plattenblöcken, eine einwandfreie Anbindung der Polbrücken zu erreichen.

Die Aufgabe wird mit einem Plattenblock gelöst, wie er im Anspruch 1 definiert ist.

Als erfolgreiche Maßnahme zum Erreichen des genannten Ziels hat sich eine beidseitige Abschrägung der dickeren Fahnen gegen ihr äußeres Ende hin erwiesen, dergestalt, daß sich ihr anfangs rechteckiger Querschnitt über die Restlänge keilförmig verjüngt. Die dünneren Plattenfahnen der gegenpoligen Gitterplatten bleiben dagegen unverändert.

Anhand einiger Figuren wird der Gegenstand der Erfindung näher erläutert.

Figur 1    zeigt eine dickere Plattenfahne mit erfindungsgemäßer Formgebung.
Figur 2    zeigt einen Stirnfräser.
Figur 3    zeigt eine Anordnung zum Bearbeiten von Plattenfahnen mittels Stirnfräser.

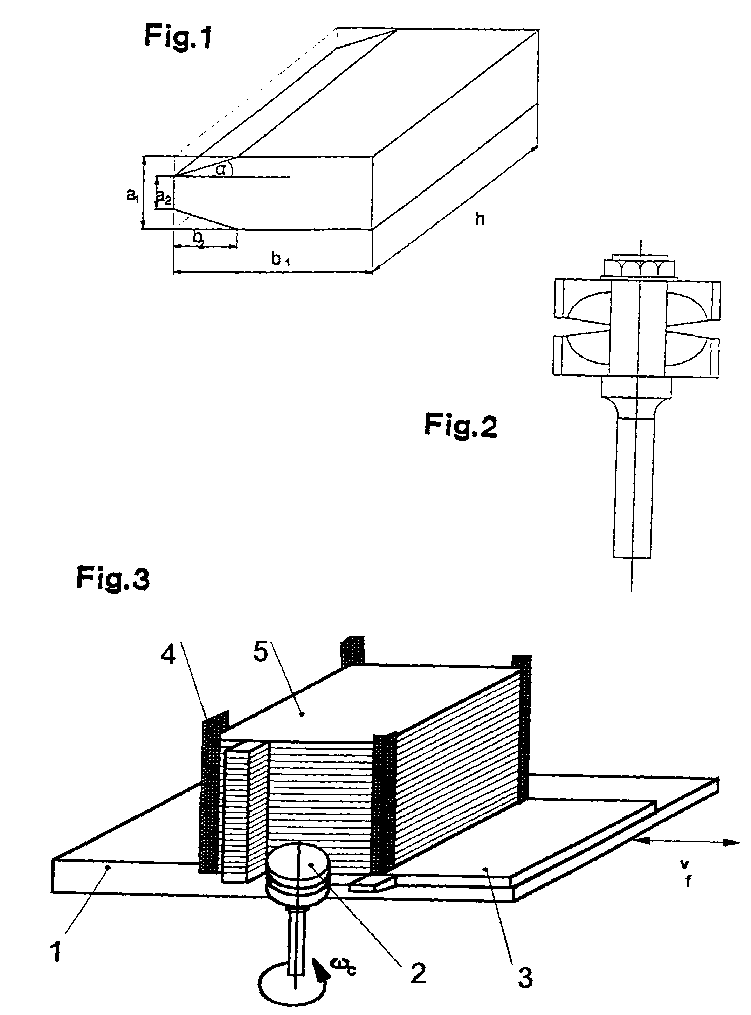

Durch Bearbeitung der dickeren Plattenfahnen eines Plattenblocks mittels eines Stirnfräsers erhalten diese die aus Fig. 1 ersichtliche Querschnittsgeometrie. Die aus der Bearbeitung hervorgehende Querschnittsfläche $A_k$ setzt sich danach aus einer Trapezfläche $A_{Trapez} = b_2 (a_1 + a_2)/2$ und einer Rechteckfläche $A_{Rechteck} = (b_1 - b_2)a_1$ zusammen, bei denen $a_1$ die Fahnendicke, $a_2$ die Enddicke ihres verjüngten Abschnitts, $b_1$ die Fahnenlänge und $b_2$ die Länge des verjüngten Fahnenabschnitts bedeuten. Mit $h$ ist die Breite der Fahne bezeichnet.

Die Fahnendicke $a_1$ schwankt im allgemeinen zwi-

schen 1,3mm und 2,5mm, während die Fahnenlängen $b_1$ etwa zwischen 15,5mm und 21mm liegen.

Der Winkel $\alpha$ der Abschrägung ist durch den Öffnungswinkel des Stirnfräsers gegeben und liegt im Bereich 3-7°. Dann gilt für die kürzere der unterschiedlich langen parallelen Seiten des Trapezes (Enddicke des verjüngten Fahnenabschnitts)

$$a_2 = a_1 - 2b_2 \tan\alpha.$$

Aus werkzeugtechnischen Gründen kann $a_2$ jedoch ein Minimum von 0,5mm nicht unterschreiten.

Hat eine dünnere Plattenfahne (in der Figur 1 nicht dargestellt) die Dicke $a_1$, wobei $a_1 > a_1' > a_2$, so gilt für deren Querschnittsfläche

$$A_r = b_1 a_1'$$

Es läßt sich zeigen, daß, gleiche Bleitemperatur für beide Fahnengeometrien vorausgesetzt, die Übergangswärmen für die erfindungsgemäß geformten dickeren und die im Originalzustand belassenen, dünneren Plattenfahnen mit durchgehend rechteckigem Querschnitt dann gleich sind, wenn die Querschnittsflächen gleich sind, also $A_k = A_{Trapez} + A_{Rechteck} = A_r$
Wegen der gleichen Fahnenbreite h müssen bei gleichen Querschnittsflächen von keilförmiger und rechteckiger Fahne auch deren Volumina gleich sein, so daß gleiche Übergangswärmen auch für gleiche Fahnenvolumina gelten.

Die erfindungsgemäße Maßnahme einer keilförmigen Querschnittsverjüngung der dickeren Plattenfahnen, um sie dem Volumen der dünneren Plattenfahnen anzugleichen, wird besonders vorteilhaft mittels eines Stirnfräsers nach Fig. 2 durchgeführt. Dabei überträgt sich die konische Geometrie seines Fräskopfes direkt auf die Fahne.

Vor der Bearbeitung sind die Gitterplatten gemäß Fig. 3 zwischen festen Führungselementen 4 zu einem Stapel 5 geordnet. Die Führungselemente begrenzen einen Schacht, während ein horizontal in Richtung des Doppelpfeils bewegbarer Schieber 1 die Auflagefläche des Plattenstapels bildet.

Mit einem Absatz, dessen Höhe jedoch geringer als die kleinste vorkommende Plattendicke ist, erfaßt der Schieber die zuunterst liegende Platte 3 und führt sie bei seiner Bewegung nach rechts mit der exponierten Fahne am Stirnfräser 2 vorbei. Dabei werden Kräfte, die durch den Fräser an der zu bearbeitenden Platte entstehen, durch seitliche Führungen (nicht dargestellt) aufgefangen. Die Fahne ist nach der Bearbeitung durch den Fräser keilförmig.

Unter dem Eigengewicht des Plattenstapels, welches zur Lagefixierung der jeweils untersten Platte ausgenutzt wird, sacken nach deren Bearbeitung die Platten im Schacht nach, während der Schieber in seine Ausgangsposition zurückfährt.

Durch die keilförmige Geometrie wird erfindungsgemäß der Wärmehaushalt der Plattenfahne der einen Polarität an den Wärmehaushalt der Plattenfahne der anderen Polarität angeglichen. Dadurch können geometrisch unterschiedlich gestaltete Fahnen mit derselben Bleitemperatur vergossen werden ohne die Gefahr, daß im Extremfall dickere Fahnen etwa zu wenig angegossen sind, während dünnere Fahnen sich im Schmelzbad bereits aufgelöst haben. Das Ergebnis ist eine deutliche Qualitätsverbesserung beim Fahnenanguß.

Ein besonderer Vorteil des Anfräsens besteht ferner darin, daß die Fahnen mit blanken Oberflächen zum Anguß gelangen, so daß die Entfernung einer Oxidhaut durch ein Flußmittel und dessen anschließende Beseitigung, die selten vollständig gelingt, entfällt.

## Claims

1. A plate pack for lead accumulators comprising a number of positive and negative plates provided with plate lugs which are tapered to form a wedge shape, which plate pack is manufactured by encapsulating the lugs in a casting mould containing the bridge lead, characterized in that the plate lugs of the plates of the one polarity are thicker than the plate lugs of the other polarity, and in that the thicker plate lugs are tapered to form a wedge shape over an end section of their length, both the total cross-sectional surface areas and the volumes of the thicker plate lugs, which are tapered to form a wedge shape, and of the thinner lug diverters, which are left in their original state, being mutually identical.

2. A plate pack according to Claim 1, characterized in that the cross-sectional surface of the wedge-shaped lug section has a trapezium shape of which the shorter of the parallel but differently dimensioned sides forms the outer edge of the plate lug.

3. A process for manufacturing a plate pack according to Claim 1 and/or Claim 2, characterized in that the wedge-shaped tapering of the thicker plate lugs is produced by machining the lug surfaces on both sides using face cutters.

4. A process for manufacturing a plate pack according to Claim 3, characterized in that, from a pack of plates provided with thicker plate lugs, each plate is pushed out individually by a slide means and the lug surface is tapered to a point on both sides by means of a face cutter whilst the plate is fixed under the pressure of the plates respectively above it.

## Patentansprüche

1. Plattenblock für Bleiakkumulatoren aus einer Anzahl von mit keilförmig verjüngten Plattenfahnen versehenen positiven und negativen Platten, der durch Umgießen der Fahnen in einer das Brückenblei enthaltenden Gießform hergestellt ist, dadurch gekennzeichnet, daß die Plattenfahnen der Platten der einen Polarität dicker sind als die Plattenfahnen der anderen Polarität, und daß die dickeren Plattenfahnen über einen Endabschnitt ihrer Länge keilförmig verjüngt sind, wobei sowohl die Gesamtquerschnittsflächen als auch die Volumina der keilförmig verjüngten dickeren Plattenfahnen und der originalbelassenen dünneren Fahnenableiter einander gleich sind.

2. Plattenblock nach Anspruch 1, dadurch gekennzeichnet, daß die Querschnittsfläche des keilförmigen Fahnenabschnitts Trapezform besitzt, von deren parallelen, aber unterschiedlich langen Seiten die kürzere die Außenkante der Plattenfahne bildet.

3. Verfahren zur Herstellung eines Plattenblocks nach Anspruch 1 und/oder Anspruch 2, dadurch gekennzeichnet, daß die keilförmige Verjüngung bei den dickeren Plattenfahnen durch beidseitiges Bearbeiten der Fahnenoberflächen mittels Stirnfräser hergestellt ist.

4. Verfahren zur Herstellung eines Plattenblocks nach Anspruch 3, dadurch gekennzeichnet, daß aus einem Stapel mit dickeren Plattenfahnen versehenen Platten durch einen Schieber jede Platte einzeln hervorgerückt und die Fahnenoberfläche beidseitig durch einen Stirnfräser zugespitzt wird, während die Platte unter dem Druck der jeweils darüberliegenden Platten fixiert ist.

## Revendications

1. Ensemble de plaques pour des accumulateurs au plomb à partir d'un certain nombre de plaques positives et négatives pourvues de pattes de plaques qui vont en se rétrécissant en forme de coin, ensemble qui est fabriqué en coulant les pattes dans un moule contenant le plomb de pontage, ensemble caractérisé en ce que

les pattes des plaques de l'une des polarités sont plus épaisses que les pattes des plaques de l'autre polarité et en ce que les pattes des plaques plus épaisses vont en se rétrécissant en forme de coin sur une section terminale de leur longueur, aussi bien les surfaces totales des sections transversales que les volumes aussi des pattes de plaque plus épaisses qui vont en se rétrécissant en forme de coin et des pattes conductrices plus minces laissées dans leur état original sont égales.

2. Ensemble de plaques selon la revendication 1, caractérisé en ce que la surface de la section transversale de la partie de la patte en forme de coin possède une forme trapézoïdale dont le côté le plus court de ceux qui ont des longueurs différentes forme le bord extérieur de la patte de plaque.

3. Procédé de fabrication d'un ensemble de plaques selon la revendication 1 et/ou la revendication 2, caractérisé en ce que le rétrécissement en forme de coin dans le cas des pattes de plaques plus épaisses est réalisé par un usinage des deux côtés des faces des pattes au moyen d'une fraise frontale.

4. Procédé de fabrication d'un ensemble de plaques selon la revendication 3, caractérisé en ce que chaque plaque est poussée en avant à partir d'un empilement de plaques pourvues de pattes plus épaisses par un poussoir et que la surface des pattes est taillée en pointe des deux côtés par une fraise frontale, alors que la plaque est fixée sous la pression des plaques qui se trouvent respectivement au-dessus.

# Fig.1

# Fig.2

# Fig.3